# EUROPÄISCHE PATENTANMELDUNG

(11) **EP 2 461 458 A2**
(43) Veröffentlichungstag der Anmeldung: **06.06.2012**
(21) Anmeldenummer: 11007093.5
(22) Anmeldetag: 01.09.2011
(51) Int. Cl.: H02J 13/00, F24D 19/10

(54) **Datenkonzentrator eines Energiekostenverteilernetzwerks**

(30) Priorität: 02.12.2010 DE 202010016042 U
(71) Anmelder: ista International GmbH, 45131 Essen (DE)
(72) Erfinder: Adick, Jörn, 44263 Dortmund (DE)
(74) Vertreter: Cohausz Hannig Borkowski Wißgott

(57) **Zusammenfassung**

Die Erfindung betrifft einen Datenkonzentrator eines
Energiekostenverteilernetzwerks mit einem Gehäuse (1), in welchem eine Elektronik angeordnet ist, mittels welcher Datentelegramme von wenigstens einem Sensorknoten eines Energiekostenverteilernetzwerks empfangbar und die empfangenen Daten für eine spätere oder sofortige Weiterleitung zwischenspeicherbar sind, bei dem zumindest eine Wand (1 a) des Gehäuses (1) wenigstens eine Solarzelle (2) umfasst, die zur Stromversorgung der Elektronik dient, wobei das Gehäuse (1) mit dieser wenigstens einen Wand (1 a) an einer Glasscheibe (3) befestigbar ist.

## Beschreibung

Die Erfindung betrifft einen Datenkonzentrator eines Energiekostenverteilernetzwerks mit einem Gehäuse, in welchem eine Elektronik angeordnet ist, mittels welcher Datentelegramme von wenigstens einem Sensorknoten eines Energiekostenverteilernetzwerks empfangbar und die empfangenen Daten für eine spätere oder sofortige Weiterleitung zwischenspeicherbar sind.

Energiekostenvertdilernetzwerke sind im Stand der Technik bekannt und umfassen üblicherweise mehrere sogenannte Sensorknoten, die Teil des Netzwerks sind und eine Sensorik umfassen, mittels der Messwerte für eine spätere relative Kostenverteilung erfassbar sind.

Beispielsweise können solche Sensorknoten durch sogenannte Heizkostenverteiler ausgebildet werden, die an Heizkörpern befestigt sind, um die von einem jeweiligen Heizkörper abgebenden Wärmemengen zu erfassen und sodann die erfassten Messwerte zur Grundlage einer jährlichen Heizkostenumlage zu machen.

Ebenso können als Sensorknoten Wasserzähler zwecks Erfassung einer verbrauchten Wassermenge oder Wärmemengenzähler in Warmwasserleitungen oder auch Stromzähler etc. zum Einsatz kommen.

Wesentlich ist es für derartige Energiekostenverteilernetzwerke, dass ein jeweiliger Sensorknoten eingerichtet ist, Messwerte zu erfassen, die eine bestimmte Energieabgabe von an sich grundsätzlich beliebiger Energieform zu erfassen und diese Messwerte funktechnisch weiter zu kommunizieren zu einem sogenannten Datenkonzentrator, wobei eine solche Funkkommunikation zwischen Sensorknoten und Datenkonzentrator direkt oder aber auch mittelbar über weitere Sensorknoten erfolgen kann.

Die Datenübertragung erfolgt dabei über sogenannte Datentelegramme, d.h. zeitlich begrenzte Datenpakete, die neben gegebenenfalls Identifikationsdaten und für das verwendete Datenprotokoll benötigte Daten auch die eigentlichen Nutzdaten umfassen, nämlich solche Nutzdaten, die den Energieverbrauch innerhalb einer bestimmten Zeiteinheit, wie beispielsweise eines Abrechnungsjahrs enthalten.

Es ist dabei vorgesehen, dass die Messdaten von einer Vielzahl von Sensorknoten mit Hilfe eines Datenkonzentrators, der die Datentelegramme und die damit versendeten Messdaten empfängt, gesammelt werden, so dass die Messdaten sodann nicht von jedem einzelnen der Sensorknoten zu Abrechnungszwecken abgerufen werden müssen, sondern konzentriert aus dem Datenkonzentrator entnehmbar sind, wofür dieser Datenkonzentrator beispielsweise die angesammelten Messdaten ebenso funkbasiert, beispielsweise über Mobilfunk, an eine Zentrale überträgt oder die Messdaten auf anderem Kommunikationswege über z.B. optische oder kabelgebundene oder auch Funkschnittstellen aus dem Datenkonzentrator abgefragt werden können, wofür beispielsweise auch Personal eingesetzt werden kann.

Um insbesondere das Weiterversenden oder das Abfragen der gesammelten Daten aus einem Datenkonzentrator zu erleichtern, ist es dabei im Stand der Technik vorgesehen, dass solche Datenkonzentratoren an Stellen angeordnet werden, an denen zum einen guter Funkempfang zu den einzelnen Sensorknoten gegeben ist und zum anderen auch die Abfrage oder Weiterleitung der Daten aus dem Datenkonzentrator möglichst leicht vorgenommen werden kann, beispielsweise weil der Montageort eines Datenkonzentrators durch eine Person quasi jederzeit erreichbar ist.

Hierfür ist es beispielsweise bekannt, solche Datenkonzentratoren in den Treppenhäusern von Häusern anzuordnen, so dass diese Datenkonzentratoren die Daten von den einzelnen Sensorknoten der verschiedenen Wohnungen sammeln können und Ablesepersonal sodann die gesammelten Daten dem Datenkonzentrator entnehmen kann, ohne die einzelnen Wohnungen betreten zu müssen.

Dabei wird es als nachteilig empfunden, dass Datenkonzentratoren der bislang im Stand der Technik bekannten Art für ihre Funktion einen externen Stromanschluss benötigen und somit der Montageort eine entsprechende Stromversorgung bereitstellen muss, dass also beispielsweise eine Steckdose im Treppenhaus vorgesehen sein muss. Solche Steckdosen könnten jedoch dann auch zu missbräuchlichen Zwecken verwendet werden.

Eine Alternative ist die rein batteriebetriebene Ausgestaltung eines Datenkonzentrators, was jedoch bedeutet, dass aufgrund des intensiven Funkkontakts mit einer Vielzahl von Sensorknoten eine Batteriekapazität eines solchen Datenkonzentrators vergleichsweise schnell erschöpft ist.

Es ist daher die Aufgabe der Erfindung, einen Datenkonzentrator der bekannten gattungsgemäßen Art weiterzubilden und einen sicheren dauerhaften Betrieb eines solchen Datenkonzentrators zu ermöglichen.

Diese Aufgabe wird dadurch gelöst, dass zumindest eine Wand des Gehäuses eines erfindungsgemäßen Datenkonzentrators wenigstens eine Solarzelle umfasst, die zur Stromversorgung der Elektronik dient, wobei das Gehäuse mit dieser wenigstens einen Wand an einer Glasscheibe befestigbar ist.

So ist es der wesentliche Kerngedanke der Erfindung, dass eine Stromversorgung der Elektronik eines erfindungsgemäßen Datenkonzentrators nunmehr keine externe Stromversorgung z.B. im Sinne eines 230V/240V-Netzanschlusses benötigt, somit also ein erfindungsgemäßer Datenkonzentrator völlig autark von der Bereitstellung einer externen Stromversorgung betrieben werden kann.

Dies wird nun dadurch erreicht, dass die wenigstens eine Solarzelle an oder in wenigstens einer Wand des Gehäuses durch Lichteinstrahlung, insbesondere Sonneneinstrahlung von der äußeren Umgebung durch eine Glasscheibe, an welcher der Datenkonzentrator befestigt ist, genügend elektrische Leistung bereitstellt, um die Elektronik des Datenkonzentrators zu versorgen, also die Empfangs- und/oder Sendetätigkeit zu ermöglichen.

Dabei kann es in einer Ausführung der Erfindung vorgesehen sein, dass die wenigstens eine Solarzelle unmittelbar die Stromversorgung der Elektronik bildet oder aber dass die Solarzelle eingesetzt ist zum Aufladen eines im Gehäuse angeordneten Energiespeichers, wie beispielsweise eines Akkumulators oder Kondensators.

Insbesondere die letztgenannte Ausführung hat hier den Vorteil, dass ein Datenkonzentrator durchgängig arbeiten kann und mit Spannung bzw. Strom versorgt ist, wobei in beleuchtungsschwachen Zeiten, wie beispielsweise nachts, der Datenkonzentrator bzw. dessen Elektronik die benötigte elektrische Leistung aus einem Energiespeicher, wie z.B. einem Akkumulator oder auch einem Kondensator entnimmt, der in beleuchtungsstarken Zeiten, wie beispielsweise tagsüber, mittels der Solarzelle aufgeladen wird.

In einer Ausführungsform kann es auch vorgesehen sein, dass der Datenkonzentrator zusätzlich zu einem solarladbaren Energiespeicher auch eine Batterie umfasst sowie eine Umschalteinheit, mittels der die Stromversorgung von dem solar ladbaren Energiespeicher auf die Batterie umschaltbar ist. Hierbei kann bevorzugt die Umschaltbarkeit in beide Richtungen, bevorzugt wiederholt erfolgen, je nachdem, ob die Stromversorgung von der Batterie oder dem solarladbaren Energiespeicher übernommen werden soll.

Eine solche Ausführung ist insbesondere dann sinnvoll, wenn gegebenenfalls aufgrund längerer Dunkelphasen, wie beispielsweise in der Winterzeit, nicht genügend solare Energie zur Verfügung steht, um den solar ladbaren Energiespeicher bei einem genügend hohen Energieniveau zu halten, um einen sicheren durchgängigen Betrieb der Elektronik des Datenkonzentrators zu gewährleisten. In einem solchen Fall kann es vorgesehen sein, gegebenenfalls nur übergangsweise eine Umschaltung vorzunehmen und die Stromversorgung aus der vorgenannten Batterie zu beziehen. Eine solche Umschaltung kann beispielsweise in Abhängigkeit des, z.B. sensorisch erfassten oder rechnerisch ermittelten Ladeniveaus des solarladbaren Energiespeichers erfolgen.

Wie eingangs erwähnt, ist es vorgesehen, wenigstens eine Wand des Gehäuses mit einer Solarzelle auszustatten. Eine solche Wand kann als Rückwand des Gehäuses bezeichnet werden und dient dazu, den Datenkonzentrator mittels dieser Wand an einer Glasscheibe, wie beispielsweise einem Fenster, z.B. eines Treppenhauses oder einer Wohnung, zu befestigen, so dass durch das Fenster Sonnenlicht auf die Solarzelle auftreffen kann und die benötigte Energie zur direkten oder indirekten Stromversorgung über einen ladbaren Energiespeicher zu gewährleisten.

In einer Weiterbildung kann es auch vorgesehen sein, wenigstens eine weitere Wand des Gehäuses, die unter einem Winkel, insbesondere einem rechten Winkel zu einer Glasscheibe angeordnet ist, an welcher der Datenkonzentrator befestigbar ist, mit wenigstens einer weiteren Solarzelle auszustatten.

Bezogen auf eine übliche Montageposition des Gehäuses eines solchen Datenkonzentrators zu einer Fensterscheibe kann es sich somit bei dieser wenigstens einen weiteren Wand bevorzugterweise um eine Seitenwand oder die obere Wandfläche des Gehäuses handeln, insbesondere also eine solche Wand, die direkt über eine Gehäusekante an die Rückwand anschließt, mit der die Befestigung an der Glasscheibe erfolgt.

So wird nämlich im Regelfall davon auszugehen sein, dass der solare Lichteinfall auf die Rückseite des Gehäuses, also diejenige Wand, die unmittelbar an der Glasscheibe befestigt ist, nicht exakt im rechten Winkel erfolgt, was schon aufgrund der Erdrotation nicht zu allen Zeiten möglich ist, so dass davon auszugehen ist, dass im Laufe eines Tages der Sonnenlichteinfall auch auf wenigstens eine seitliche Fläche des Datenkonzentrators oder auf die Oberfläche des Datenkonzentrators stattfindet und somit auch von dieser Wand solare Energie bereitgestellt werden kann.

Es ist daher in dieser Ausführungsform vorgesehen, dass wenigstens eine weitere Wand zusätzlich zu der Rückwand, die zur Befestigung einer Glasscheibe vorgesehen ist, mit einer Solarzelle auszustatten.

In Abhängigkeit der solaren Einstrahlungsbedingungen an der zur Montage vorgesehenen Fensterscheibe kann es sodann auch vorgesehen sein, den erfindungsgemäßen Datenkonzentrator so auszurichten, dass über den Tagesverlauf eine möglichst optimale Ausleuchtung nicht nur der rückwärtigen Montagewand, sondern auch der wenigstens einen weiteren Wand gegeben ist.

Selbstverständlich ist es in einer Ausführungsform ebenso möglich, sämtliche Wandbereiche eines Gehäuses eines Datenkonzentrators mit Solarzellen auszustatten, insbesondere um so auch Licht aus Innenräumen zur Energiegewinnung zu nutzen.

Bei den zuvor beschriebenen Ausführungsformen kann es unabhängig davon, welche der Wände mit einer Solarzelle ausgestattet sind, vorgesehen sein, dass die wenigstens eine Solarzelle von außen in eine Wand des Gehäuses eingelassen ist. Hierfür kann eine solche Wand wenigstens eine Vertiefung mit einer Tiefe aufweisen, die der Dicke der aufzunehmenden Solarzelle zumindest im Wesentlichen entspricht, wobei die Grundfläche der Vertiefung zumindest etwas größer ist als die Solarzellenfläche.

Beispielsweise kann in einem solchen Fall eine Solarzelle durch die Wand hindurch mit der Elektronik oder mit wenigstens einer anderen Solarzelle verkabelt sein.

Eine solche Ausführungsform hat den Vorteil, dass eine in die Wand von außen eingesetzte Solarzelle nicht durch weitere Elemente überdeckt ist und somit maximale Lichtintensität durch diese Solarzelle eingefangen werden kann. Zwar ist die Solarzelle sodann unmittelbar den Umweltbedingungen ausgesetzt, insbesondere auch bruchgefährdet, dies ist jedoch insoweit unkritisch, wenn eine Wand, in die die Solarzelle von außen eingebracht ist, die Wand bildet, mit welcher das Gehäuse an der Glasscheibe befestigt wird, weil sodann im fertigen montierten Zustand die Solarzelle von der transparenten Glasscheibe überdeckt wird und somit nach der Montage vor äußeren Umwelteinflüssen geschützt ist.

In einer anderen alternativen, aber auch mit der vorherigen Ausführung kombinierbaren weiteren Ausführung kann es auch vorgesehen sein, dass wenigstens eine Wand des Gehäuses transparent oder zumindest transluzent ausgebildet ist oder wenigstens eine Solarzelle im Inneren der Gehäuses an der Wand oder zumindest der Wand gegenüberliegend befestigt ist und durch die Wand hindurch beleuchtbar ist.

So mag bei einer solchen Ausführungsform gegebenenfalls die maximal einfangbare Lichtintensität geringer sein als bei der zuvor genannten Ausführung, hier ist jedoch ein mechanischer Schutz der Solarzelle dadurch gegeben, dass diese im Inneren des Gehäuses angeordnet ist und durch die Wand hindurch eine Beleuchtung erfolgt. Eventuelle Intensitätseinbußen können dadurch reduziert werden, dass eine Gehäusewand transparent, insbesondere klar durchsichtig ausgebildet ist, so dass ein Transmissionsverlust im Wesentlichen vernachlässigbar ist.

Um eine Befestigung möglichst einfach zu gestalten, kann es in einer Ausführung vorgesehen sein, dass die an einer Glasscheibe befestigbare Wand des Datenkonzentratorgehäuses mit wenigstens einer Solarzelle wenigstens einen klebenden Bereich aufweist, der mit einer Glasscheibe zum Zweck der Befestigung kontaktierbar ist.

Beispielsweise kann es hierbei vorgesehen sein, dass der klebende Bereich einen die wenigstens eine Solarzelle umgebenden Rahmen ausbildet. Dies hat den Vorteil, dass der klebende Bereich die aktive Lichteinfallsfläche der Solarzelle nicht überdeckt, somit also keine künstliche Abschattung erzeugt. Hierfür ist es sodann im Wesentlichen vorgesehen, dass die Fläche der Solarzelle kleiner ist als die Fläche der Wand in oder an der die Solarzelle angeordnet ist, so dass der klebende Bereich auf einer Gehäusewand des Datenkonzentrators genügend breit ist, um eine Solarzelle entsprechend rahmenförmig zu umgeben. Beispielsweise kann dieser klebende Bereich durch ein doppelseitiges Klebeband ausgebildet sein.

Ebenso besteht die Möglichkeit, einen solchen Wandbereich, der an einer Glasscheibe befestigt werden soll, ohne besondere Klebevorrichtungen auszustatten und die an der Glasscheibe zu befestigende Wand dünn mit Silikon, insbesondere transparentem Silikon, zu bestreichen und auf diese Art und Weise an einer Glasscheibe zu befestigen. Auch hier wird davon auszugehen sein, dass ein eventueller Intensitätsverlust aufgrund der Transmission des Sonnenlichtes durch das zur Klebung verwendete Silikon im Wesentlichen vernachlässigbar ist.

Auch kann eine Wand mit Solarzelle ohne Klebemittel an die Glasscheibe angesetzt werden, wobei sodann nur eine Verklebung kantennah an der jeweiligen Kante erfolgt, an der die Seitenwände in die Befestigungswand bzw. Rückwand übergehen.

In einer Weiterbildung der Erfindung kann es auch vorgesehen sein, dass die Elektronik des Datenkonzentrators derart eingerichtet ist, dass die Glasscheibe, an welcher die Befestigung erfolgt, ein insbesondere passives Bauteil der Elektronik bildet. Beispielsweise kann die Glasscheibe ein Dielektrikum der Elektronik bilden, z.B. ein Dielektrikum einer Kondensatoranordnung. In einer beispielhaften Ausgestaltung kann es dabei vorgesehen sein, dass eine Antennenanordnung, die im Datenkonzentrator eingesetzt ist, um Daten, insbesondere Datentelegramme zu empfangen und/oder zu versenden, die Glasscheibe, an welcher der Datenkonzentrator befestigt ist, als Dielektrikum nutzt.

Beispielsweise kann eine Antenne kapazitiv über die Scheibe als Dielektrikum an den Datenkonzentrator angekoppelt sein. Bei einer solchen Ausführung kann der Datenkonzentrator z.B. an der Innenseite einer Fensterscheibe, beispielsweise in einem Treppenhaus angeordnet sein, wohingegen eine Antenne zum Versenden und/oder Empfangen von Daten und/oder Datentelegrammen außerhalb des Gebäudes und somit an der Außenseite der Scheibe klebend befestigt ist, wobei eine Metallfläche, an welcher die Antenne außen befestigt ist und eine Metallfläche, mit welcher die Elektronik mit dem Inneren verbunden ist, die Glasscheibe als Dielektrikum einschließen. Hierbei kann die Anordnung im Wesentlichen so sein, dass die vorgenannten metallischen Flächen eine solarwirksame Fläche einer Solarzelle nicht überschatten.

In einer wiederum weiteren Ausführung kann es auch vorgesehen sein, dass die Solarzelle selbst einen Teil einer Sende- und/oder Empfangseinrichtung der Elektronik, insbesondere einer Antenne ausbildet. Beispielsweise können Zu- und Ableitungen der Solarzelle, beispielsweise solche, die die Solarzelle rahmenförmig umgeben, als Antenne genutzt werden. Auch dies ist insoweit vorteilhaft, als dass die Solarzelle scheibennah angeordnet ist und insoweit auch besonders gute Empfangsbedingungen über die metallischen Teile einer Solarzelle erzielt werden können.

Ein Ausführungsbeispiel der Erfindung ist in den nachfolgenden Figuren beschrieben. Es zeigen:
- Figur 1: das Gehäuse eines Datenkonzentrators in Aufsicht auf die Gehäusevorderseite
- Figur 2: das Gehäuse eines Datenkonzentrators der erfindungsgemäßen Art in Aufsicht auf die Gehäuserückseite
- Figur 3: die Befestigung eines erfindungsgemäßen Datenkonzentrators an einer Fensterscheibe

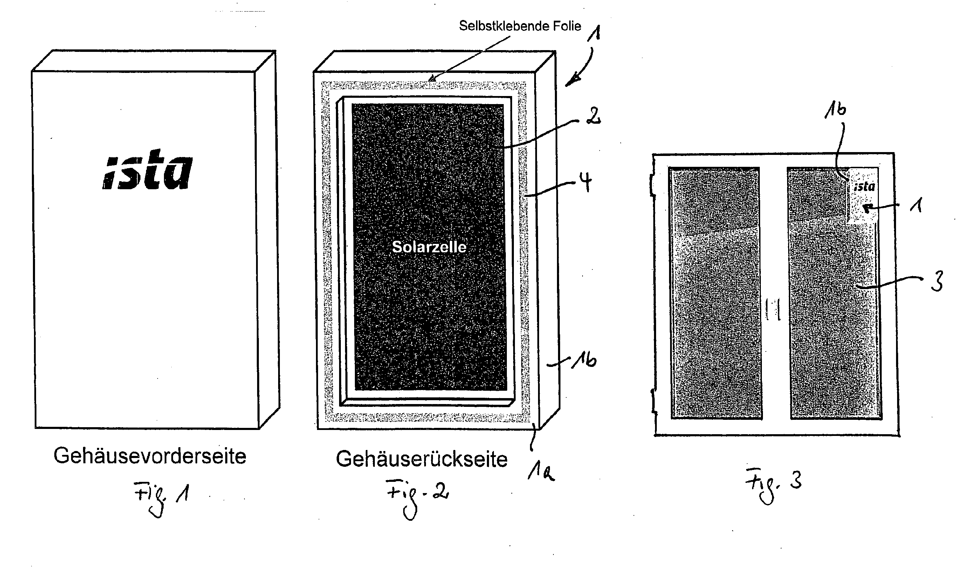

Die Figur 1 zeigt in vereinfachter Darstellung ein im Wesentlichen quaderförmiges Gehäuse 1 eines erfindungsgemäßen Datenkonzentrators in Aufsicht auf die Gehäusevorderseite. Dieses Gehäuses 1, welches beispielsweise aus Kunststoff gefertigt sein kann, umfasst wie einleitend beschrieben die gesamte Elektronik des Datenkonzentrators, die vorgesehen ist, um Datentelegramme von Sensorknoten zu empfangen und gegebenenfalls die gesammelten Daten weiterzuleiten. Hierfür ist die Elektronik in dem dargestellten Gehäuse 1 untergebracht und beispielsweise gegen Feuchtigkeit geschützt. Die Elektronik selbst ist hier nicht gezeigt.

Der erfindungswesentliche Aspekt des neuen Datenkonzentrators ist hier im Wesentlichen der Figur 2 zu entnehmen, welches die Gehäuserückwand 1 a zeigt. Erkennbar ist, dass in Aufsicht auf die Gehäuserückswand 1 a an oder in der Rückwand 1 a des Gehäuses 1 dieses Datenkonzentrators eine Solarzelle 2 angeordnet ist, die in ihrer Fläche kleiner als die Grundfläche der Rückwand 1 a ist, so dass ein verbleibender Bereich der Gehäuserückwand 1a die Solarzelle 2 rahmenförmig umgibt. Dieser rahmenförmige Bereich 4 ist hier benutzt, um daran eine selbstklebende Folie anzubringen, die sodann ebenso rahmenförmig die Solarzelle 2 umgibt und zur Befestigung an einer Fensterglasscheibe3 dienen kann, ohne dass hierdurch die Solarzelle 2 abgeschattet wird.

Die Figur 3 zeigt eine solche Befestigungsmöglichkeit, hier in einer Anordnung rechts oben an der Fensterglasscheibe 3, wobei wiederum eine Aufsicht auf die Gehäusevorderwand dargestellt ist. Hier ist nun die Solarzelle 2 der Fensterscheibe 3 zugewandt und kann aufgrund der so gewählten Montage durch Sonnenlicht, welches in das Gebäude eintritt, beleuchtet werden. Dieses Sonnenlicht wird in der Solarzelle 2 umgewandelt, so dass durch die Sonneneinstrahlung beispielsweise ein Ladestrom für einen internen solaren Energiespeicher, also einen solchen Energiespeicher, der durch Sonnenlicht aufladbar ist, bereitgestellt wird.

Die Anordnung, wie sie in der Figur 3 gewählt ist, zeigt, dass das Gehäuse 1 des Datenkonzentrators in der rechten oberen Ecke der Fensterglasscheibe 3 befestigt ist. Hierdurch wird es ersichtlich, dass bezogen auf die Figur 3 die linke seitliche Wand 1 b (in der Figur 2 die rechte Wand) des Datenkonzentrators 1 ebenso von Sonnenlicht beleuchtet wird. In einer Weiterbildung der Erfindung könnte es also auch vorgesehen sein, so wie es im allgemeinen Teil der Erfindung beschrieben ist, dass auch diese Seitenwand 1 b eine Solarzelle aufweist, um Ladestrom für einen Energiespeicher im Inneren des Gehäuses 1 bereitzustellen oder die Elektronik des Datenkonzentrators unmittelbar mit Strom zu versorgen.

## Patentansprüche

1. Datenkonzentrator eines Energiekostenverteilernetzwerks mit einem Gehäuse (1), in welchem eine Elektronik angeordnet ist, mittels welcher Datentelegramme von wenigstens einem Sensorknoten eines Energiekostenverteilernetzwerks empfangbar und die empfangenen Daten für eine spätere oder sofortige Weiterleitung zwischenspeicherbar sind, **dadurch gekennzeichnet, dass** zumindest eine Wand (1a) des Gehäuses (1) wenigstens eine Solarzelle (2) umfasst, die zur Stromversorgung der Elektronik dient, wobei das Gehäuse (1) mit dieser wenigstens einen Wand (1 a) an einer Glasscheibe (3) befestigbar ist.

2. Datenkonzentrator nach Anspruch 1, **dadurch gekennzeichnet, dass** die wenigstens eine Solarzelle (2) unmittelbar die Stromversorgung der Elektronik bildet oder eingesetzt ist zum Aufladen eines im Gehäuse (1) angeordneten Energiespeichers, insbesondere eines Akkumulators.

3. Datenkonzentrator nach einem der vorherigen Ansprüche, **dadurch gekennzeichnet, dass** wenigstens eine weitere Wand (1 b) des Gehäuses (1), die unter einen insbesondere rechten Winkel zu einer Glasscheibe (3) angeordnet ist, an welcher der Datenkonzentrator befestigbar ist, wenigstens eine Solarzelle aufweist.

4. Datenkonzentrator nach einem der vorherigen Ansprüche, **dadurch gekennzeichnet, dass** die wenigstens eine Solarzelle (2) von außen in eine Wand (1 a, 1 b) des Gehäuses (1) eingelassen ist, insbesondere wobei die wenigstens eine Solarzelle (2) durch die Wand (1 a, 1 b) hindurch mit der Elektronik oder wenigstens einer anderen Solarzelle verkabelt ist.

5. Datenkonzentrator nach einem der vorherigen Ansprüche, **dadurch gekennzeichnet, dass** wenigstens eine Wand (1 a, 1 b) des Gehäuses (1) transparent oder zumindest transluzent ausgebildet ist und wenigstens eine Solarzelle (2) im Inneren des Gehäuses (1) an der Wand (1 a, 1 b) oder zumindest der Wand (1 a, 1 b) gegenüberliegend befestigt ist und durch die Wand (1 a, 1 b) hindurch beleuchtbar ist.

6. Datenkonzentrator nach einem der vorherigen Ansprüche, **dadurch gekennzeichnet, dass** die an einer Glasscheibe (3) befestigbare Wand (1 a) mit wenigstens einer Solarzelle (2) wenigstens einen klebenden Bereich (4) aufweist, der mit einer Glasscheibe (3) zum Zweck der Befestigung kontaktierbar ist.

7. Datenkonzentrator nach Anspruch 6, **dadurch gekennzeichnet, dass** der klebende Bereich (4) einen die wenigstens eine Solarzelle (2) umgebenden Rahmen ausbildet.

8. Datenkonzentrator nach Anspruch 6 oder 7, **dadurch gekennzeichnet, dass** der klebende Bereich (4) durch ein doppelseitiges Klebeband ausgebildet ist.

9. Datenkonzentrator nach einem der vorherigen Ansprüche, **dadurch gekennzeichnet, dass** die Elektronik derart eingerichtet ist, dass die Glasscheibe (3), an der die Befestigung erfolgt, ein passives Bauteil der Elektronik bildet.

10. Datenkonzentrator nach Anspruch 9, **dadurch gekennzeichnet, dass** die Glasscheibe (3) ein Dielektrikum zumindest eines Teils der Elektronik bildet.

11. Datenkonzentrator nach einem der vorherigen Ansprüche, **dadurch gekennzeichnet, dass** wenigstens eine Solarzelle (2) einen Teil einer Sende- und/oder Empfangseinheit der Elektronik, insbesondere einer Antenne bildet.

12. Datenkonzentrator nach einem der vorherigen Ansprüche, **dadurch gekennzeichnet, dass** er eine Batterie umfasst und eine Umschalteinheit, mittels der die Stromversorgung von einem solar ladbaren Energiespeicher auf die Batterie umschaltbar ist und/oder umgekehrt. '

13. Datenkonzentrator nach Anspruch 12, **dadurch gekennzeichnet, dass** die Umschalteinheit eingerichtet ist, die Umschaltung in Abhängigkeit des Ladeniveaus des solar ladbaren Energiespeichers vorzunehmen.
